# EUROPÄISCHE PATENTSCHRIFT

(11) **EP 3 833 787 B1**
(45) Veröffentlichungstag und Bekanntmachung des Hinweises auf die Patenterteilung: **22.12.2021**
(21) Anmeldenummer: 19749708.4
(22) Anmeldetag: 01.08.2019
(51) Int. Cl.: C21C 5/46

(54) **VERFAHREN ZUM BETREIBEN EINES KONVERTERS UND TRAGVORRICHTUNG FÜR EINEN KONVERTER**
METHOD OF OPERATING A CONVERTER AND SUPPORT DEVICE FOR A CONVERTER
PROCEDE DE FONCTIONNEMENT D'UN CONVERTISSEUR ET DISPOSITIF DE SUPPORT POUR UN CONVERTISSEUR

(30) Priorität: 08.08.2018 DE 102018213291
(43) Veröffentlichungstag der Anmeldung: 16.06.2021
(73) Patentinhaber: SMS Group GmbH, 40237 Düsseldorf (DE)
(72) Erfinder: KLEIER, Tim, 42781 Haan (DE); IMIELA, Christian, 40227 Düsseldorf (DE); SCHULZE, Stephan, 40668 Meerbusch (DE); HERTEL, Jörg, 57271 Hilchenbach (DE); WALLMEROTH, Benjamin, 57290 Neunkirchen (DE); STAMMBERGER, Reiner, 57223 Kreuztal (DE); RUNGE, Andreas, 42857 Remscheid (DE); BECKERS, Daniel, 46282 Dorsten (DE); UNTERLOH, Jürgen, 46569 Hünxe (DE); BRAAM, Malte, 47803 Krefeld (DE)
(74) Vertreter: Kross, Ulrich
(86) Internationale Anmeldenummer: PCT/EP2019/070832
(87) Internationale Veröffentlichungsnummer: WO 2020/030530

(56) Entgegenhaltungen:
- JP-A- 2012 025 980
- US-A- 4 093 192
- US-A- 4 298 378
- US-B2- 9 840 746

## Beschreibung

Die Erfindung betrifft ein Verfahren zum Betreiben eines Konverters, insbesondere eines Argon-Oxygen-Dicarbonisation AOD-Konverters sowie eine Tragvorrichtung für einen solchen Konverter.

In einem Konverter wird durch Zuführung von Sauerstoff in das verflüssigte Roheisen überschüssiger Kohlenstoff herausoxidiert. Das Roheisen wird so zu Stahl.

Derartige Verfahren sind im Stand der Technik grundsätzlich bekannt.

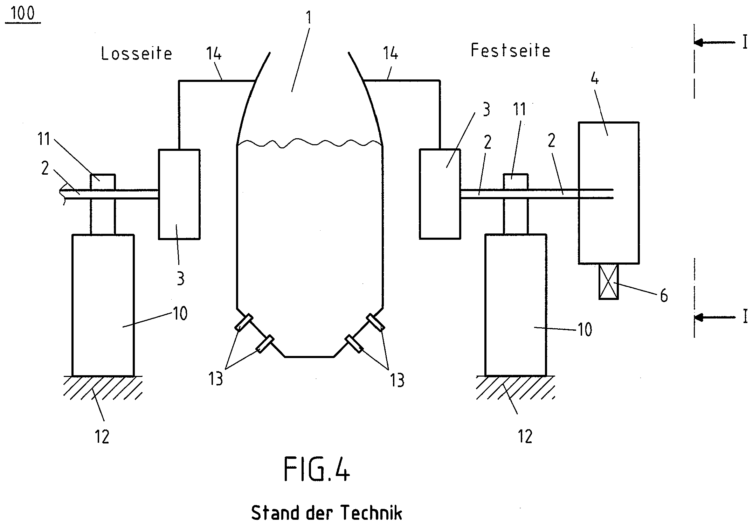

Zum besseren Verständnis der nachfolgenden Erfindung wird zunächst die grundsätzliche Lagerung und Aufhängung eines solchen AOD-Konverters anhand der Figur 4 beschrieben, wie sie aus dem Stand der Technik grundsätzlich bekannt ist:

Figur 4 zeigt den Konverter 1 mit in seinem Boden angeordneten Unterbadspiegel-Gasdüsen 13 zum Zuführen von Sauerstoff oder anderen Gasen in das Innere des Konverters während dessen Betriebs. Dieser Konverter 1 ist über Tragelemente 14 in einen Tragring 3 eingehangen. An gegenüberliegenden Seiten des Tragrings 3 sind jeweils Tragzapfen 2 angebracht, welche in ihren Längsachsen miteinander fluchten und welche die Kippachse des Konverters definieren. Die Tragzapfen 2 sind in Lagern 11 drehbar gelagert. Die Lager 11 sind ihrerseits jeweils über Lagerblöcke 10 auf dem Fundament 12 abgestützt. An der Festseite dieser Anordnung ist der Tragzapfen 2 in seiner axialen Richtung über das Lager 11 hinaus verlängert und mit einem Getriebe 4 drehgekoppelt. Über das Getriebe 4 und den Tragzapfen 2 ist der Konverter 1 mit einem vorzugsweise in das Getriebe integrierten Drehantrieb verbunden. Das Getriebe 4 ist über eine Momentenstütze 6, welche sich in der Ansicht gemäß Figur 4 senkrecht zur Zeichenebene erstreckt, ebenfalls an dem Fundament 12 abgestützt.

Die soweit beschriebene bekannte Tragevorrichtung 100 gilt auch für die vorliegende Erfindung. Die besagte Momentenstütze ist im Stand der Technik oftmals passiv, beispielsweise in Form einer Torsionswelle oder in Form von vorgespannten Federpaketen ausgebildet; siehe dazu DE 38 27 329 A1, WO 03/023 072 A1, DE 26 54 907 A1, EP 003 108 A1, DE 30 07 916 C2, DE 600 04 714 T2, JP 2012-25980 A und US 4,298,378.

Die US 4,093,192 offenbart, dass das Kippmoment des Konverters gemessen wird und mit einem vorbestimmten Kippmoment verglichen wird. Wenn festgestellt wird, dass das gemessene Ist-Kippmoment das vorbestimmte Soll-Kippmoment überschreitet, ist vorgesehen, dass der Kippantrieb für den Konverter abgeschaltet wird.

Die US 9,840,746 B2 beschreibt einen Kippantrieb für einen Konverter, wobei der Kippantrieb im Wesentlichen aus einem Hydraulikmotor besteht zum Kippen des Konverters um die horizontale Achse. Das Drehmoment des Motors wird in Abhängigkeit des maximalen Kippmoments des Konverters gemessen. Es ist erläutert, dass der Konverter stets bestrebt sein wird, eine neutrale Position einzunehmen, in welcher er sich typischerweise während eines Blasbetriebs befindet.

Während seines Betriebes gerät der Konverter insbesondere aufgrund des einleitend beschriebenen Einblasens von Sauerstoff durch die besagten Unterbadspiegeldüsen 13 in das in seinem Inneren befindliche Stahlbad in heftige Schwingungen. Diese Anregung erfolgt breitbandig in alle Richtungen, also auch in Kipprichtung des Konverters. Weitere, wenn auch nur untergeordnete, Ursachen für ein unkontrolliertes Aufschwingen des Konverters können ein Abbrand seiner Feuerfestauskleidung und/oder Verbärung sein. Hierbei wirken hohe Kräfte auf das Fundament der Gießbühne und die Momentenstütze; oftmals kommt es durch diese Schwingungen auch zu Schäden an der Momentenstütze und der Gießbühne sowie an weiteren Anlagenteilen.

Die technischen Lehren, wie sie in den genannten Druckschriften aus dem Stand der Technik beschrieben sind, sind nicht geeignet, das beschriebene Problem der Schwingungen zu lösen; die auftretenden Kräfte und Schwingungen werden bei diesen Lösungen allenfalls gedämpft; aber zum Teil müssen die Momentenstützen die besagten großen Kräfte selber aufnehmen, wodurch sie oftmals selber Schaden nehmen.

Ein anderes Konzept zur Lösung dieses Problems wird in der europäischen Patentschrift EP 2 082 068 B1 beschrieben. Bei dem dort vorgeschlagenen Verfahren wird vorgesehen, dass die Momentenstütze nur beim Kippvorgang des Konverters das Getriebe mit dem Fundament starr verbindet und dass stattdessen beim Blasbetrieb des Konverters die Momentenstütze von dem Fundament oder von dem Getriebe oder von beiden gelöst wird, so dass der Konverter dann während des Blasbetriebes frei schwingen kann. Alternativ zu der Momentenstütze kann beim Blasbetrieb ein Stoßdämpfer eingesetzt werden.

Diese vorgeschlagene Lösung hat jedoch den Nachteil, dass für die Implementierung einer entsprechenden schaltbaren Momentenstütze recht viel Ausrüstung und ein - im Falle einer Nachrüstung - umfassender Umbau erforderlich sind.

Der Erfindung liegt die Aufgabe zugrunde, ein alternatives Verfahren zum Betreiben eines Konverters bereitzustellen, bei dem die Kosten für eine Tragevorrichtung für den Konverter reduziert und gleichzeitig das von dem Konverter auf das Getriebe ausgeübte Drehmoment besser kontrolliert werden kann.

Diese Aufgabe wird durch das in Patentanspruch 1 beanspruchte Verfahren gelöst.

Der Begriff "Blasbetrieb" meint allgemein das Zuführen von Sauerstoff und in der Regel weiterer Prozessgase in eine Schmelze, z. B. eine Stahlschmelze oder flüssiges Roheisen, in einem Konverter. Das erfindungsgemäße Verfahren sowie die beanspruchte Tragvorrichtung betreffen einen Konverterbetrieb im Allgemeinen; sie sind nicht auf die Produktion von Edelstahl beschränkt.

Vorteilhafterweise ermöglicht die beanspruchte Regelung des von dem Konverter auf das Getriebe ausgeübten Drehmomentes, dass sich der Konverter während eines Blasbetriebs grundsätzlich frei bewegen kann, insbesondere dass der Konverter dann frei, d. h. ohne Positionsbegrenzung schwingen kann. Dies ist deshalb zutreffend, weil die beanspruchte Drehmomenten-Regelung - im

Unterschied zu einer Positionsregelung - den Konverter nicht in seinen Schwingungsamplituden auf bestimmte Winkelpositionen begrenzt. Mit Hilfe des beanspruchten Regelungsverfahrens wird vorteilhafterweise verhindert, das sich der Konverter nicht mehr - wie in der Vergangenheit teilweise im Stand der Technik - in eine Resonanzfrequenz aufschaukelt und dabei großen Schaden an Teilen der Tragvorrichtung, insbesondere an dem Getriebe und der Momentenstütze anrichten kann.

Die beanspruchte Drehmomenten-Regelung lässt grundsätzlich beliebige Schwingungsamplituden des Konverters zu, während sie jedoch gleichzeitig das von dem Konverter auf das Getriebe ausgeübte Drehmoment begrenzt, konkret auf ein vorgegebenes Soll-Drehmoment regelt. Dieses Soll-Drehmoment wird so vorgegeben, dass es im zulässigen Arbeitsbereich des Getriebes, des Antriebs und der Momentenstütze liegt, also insbesondere diese Komponenten nicht beschädigt.

Das Vorsehen der beanspruchten Regelung erspart eine aus dem Stand der Technik bekannte teure Ausrüstung der Tragevorrichtung im Umfeld der Momentenstütze, um den Konverter zu stabilisieren.

Die Erfindung sieht vor, dass das Soll-Drehmoment vorgegeben wird als vorzugsweise gleitender Mittelwert einer Mehrzahl von Abtastwerten des ermittelten zeitlich variablen Ist-Drehmomentes des Konverters auf das Getriebe. Hierzu wird zu Beginn des Blasvorganges für eine bestimmte Zeit ein Anfangsmittelwert ermittelt und anschließend gleitend in jedem Messzyklus erneuert.

Gemäß einem weiteren Ausführungsbeispiel der Erfindung ist es vorteilhaft, wenn die beanspruchte übergeordnete Drehmomenten-Regelung unterlagert bzw. ergänzt wird von einer Positionsregelung für das Getriebe. Diese Positionsregelung hat die Aufgabe, das Getriebe in einer vorgegebenen Soll-Winkelposition, vorzugsweise in einer horizontalen Getriebeposition, zu halten und zwar unabhängig von der Kippposition des Konverters.

Die Begriffe "Positionsregelung" und "Winkelpositionsregelung" werden gleichbedeutend verwendet. Auch die Begriffe "Winkellage" und "Winkelposition" werden gleichbedeutend verwendet.

Beide beanspruchten Regelungen, d. h. sowohl die Drehmomenten-Regelung wie auch die Winkelpositionsregelung wirken im Blasbetrieb des Konverters auf dasselbe Stellglied, nämlich eine sogenannte Drehmomentenstütze. Dabei handelt es sich um einen Hydraulikzylinder mit angeschlossenem Servoventil oder um einen elektromechanischen Antrieb.

Wenn die untergeordnete Positionsregelung für das Getriebe zusätzlich zu der übergeordneten Drehmomenten-Regelung in Kraft ist, liefern beide Regelungen jeweils einen bestimmten Anteil an einem Stellsignal für das Stellglied in Form der Momentenstütze. Erfindungsgemäß soll dabei der Anteil der Positionsregelung an dem Stellsignal wesentlich kleiner sein als der Anteil der Drehmomenten-Regelung; beispielsweise liegt zwischen diesen beiden Anteilen ein Faktor von 10 bis 100. Dieser Größenordnungsunterschied in den Anteilen kommt durch die Begrifflichkeiten "übergeordnete Regelung" und "untergeordnete bzw. unterlagerte Regelung" zum Ausdruck.

Alle bisherigen Ausführungen betrafen den Konverter in dem besagten Blasbetrieb. Zusätzlich kann das erfindungsgemäße Verfahren vorsehen, dass außerhalb des Blasbetriebs eine reine Winkelpositionsregelung für das Getriebe erfolgt; die beanspruchte Drehmomenten-Regelung wird während dieser Zeit abgeschaltet. Für diese Winkelpositionsregelung außerhalb des Blasbetriebs kann derselbe Regelkreis mit demselben Regler und demselben Stellglied in Form der Momentenstütze verwendet werden, wie für die untergeordnete Winkelpositionsregelung während des Blasbetriebs. Konkret erfolgt dann eine Regelung der Ist-Winkelposition des Getriebes auf eine vorgegebene Soll-Winkelposition, wobei diese Soll-Winkelposition beispielsweise 0° beträgt, d. h. das Getriebe ist dann horizontal ausgerichtet. Außerhalb des Blasbetriebs ist der Anteil des Drehmomenten-Regelkreises an dem Stellsignal für die Momentenstütze Null, während der Anteil des Winkelpositions-Regelkreises an dem Stellsignal 100 % beträgt.

Diese Positionsregelung für das Getriebe außerhalb des Blasbetriebs des Konverters ist insofern sinnvoll, als dass während dieser Zeit der Konverter mit Hilfe des Getriebes und einem dem Getriebe zugeordneten Antrieb um die Tragzapfen gekippt wird und insofern der Konverter dann selber keine feste Winkel- bzw. Kippposition aufweist.

Die oben genannte Aufgabe der Erfindung wird weiterhin durch eine Tragvorrichtung für den Konverter gelöst. Die Vorteile dieser Lösung entsprechen den oben mit Bezug auf das beanspruchte Verfahren genannten Vorteilen.

Der Beschreibung sind 4 Figuren beigefügt, wobei
- Figur 1: die erfindungsgemäße Tragvorrichtung mit eingehangenem Konverter in einer Seitenansicht;
- Figur 2: die Regelung des Drehmomentes auf das Getriebe und der Winkelposition des Getriebes während eines Blasbetriebs des Konverters;
- Figur 3: die Regelung der Winkelposition des Getriebes außerhalb des Blasbetriebs; und
- Figur 4: die Tragvorrichtung für den Konverter in einer Frontansicht gemäß dem Stand der Technik zeigt.

Die Erfindung wird nachfolgend unter Bezugnahme auf die besagten Figuren in Form von Ausführungsbeispielen beschrieben. In allen Figuren sind gleiche technische Elemente mit gleichen Bezugszeichen bezeichnet.

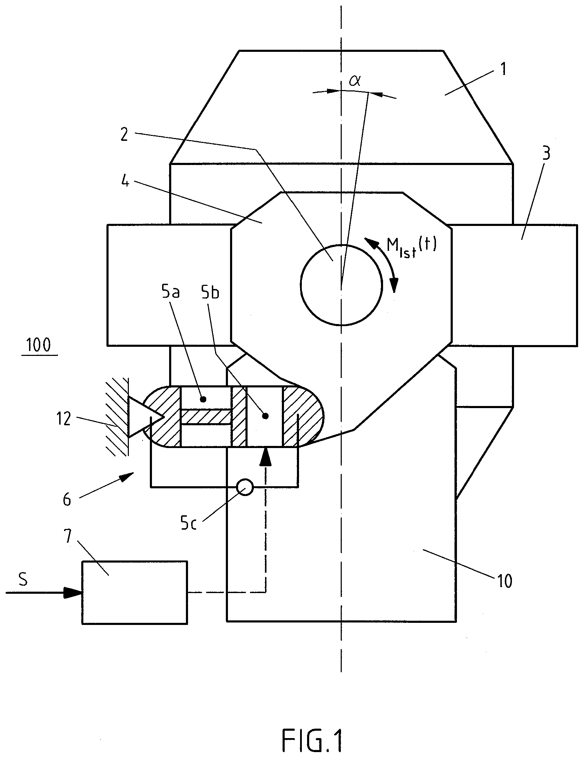

Figur 1 veranschaulicht die bereits aus Figur 4 bekannte Tragvorrichtung 100 für den Konverter 1 nochmals in einer Seitenansicht. In dieser Seitenansicht ist insbesondere zu erkennen, dass die Momentenstütze 6, die hier beispielhaft als Hydraulikzylinder mit einem zugeordneten Servoventil 7 ausgebildet ist. Die Momentenstütze 6 bildet zusammen mit dem Servoventil 7 ein Stellglied im Rahmen der erfindungsgemäßen Regelungen. Das Servoventil 7 steuert nach Maßgabe eines Stellsignals S den Druck innerhalb eines Kolbenbereiches des Hydraulikzylinders. Der Druck in einem Ringbereich des Hydraulikzylinders wird mit einem ersten Drucksensor 5a und der Druck in dem Kolbenbereich des Hydraulikzylinders wird mit einem zweiten Drucksensor 5b für die erfindungsgemäße Regelung kontinuierlich erfasst.

Ansonsten entspricht die Tragvorrichtung 100, wie sie der vorliegenden Erfindung zugrunde liegt, der in Figur 4 beschriebenen und aus dem Stand der Technik bekannten Tragvorrichtung.

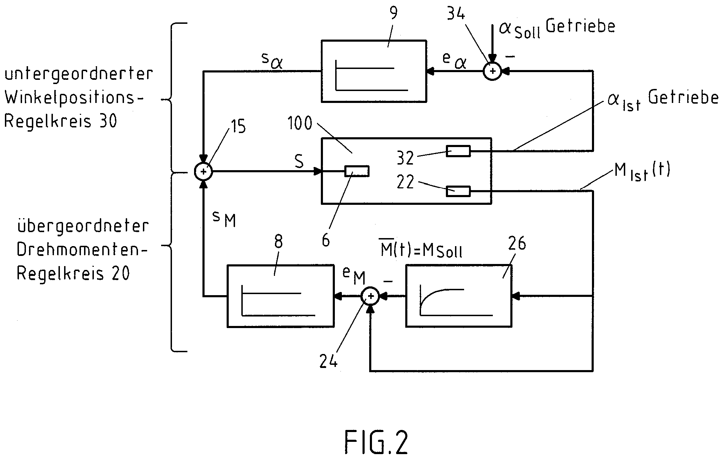

Figur 2 beschreibt das erfindungsgemäße Verfahren zum Betreiben des Konverters 1. Der Kerngedanke der vorliegenden Erfindung sieht vor, dass das von dem Konverter 1 auf das Getriebe 4 ausgeübte zeitlich variable Ist-Drehmoment M_{Ist} (t) mit Hilfe eines Drehmomenten-Regelkreises 20 auf ein vorgegebenes Soll-Drehmoment geregelt wird. Der Regelkreis 20 umfasst zunächst eine Drehmomenten-Ermittlungseinrichtung 22 zum Ermitteln des von dem Konverter 1 auf das Getriebe 4 ausgeübten zeitlich variablen Ist-Drehmomentes M_{Ist} (t). Bei der besagten Ausbildung der Momentenstütze 6 als Hydraulikzylinder kann das Ist-Drehmoment der zeitabhängigen Kraft auf den Kolben des Hydraulikzylinders multipliziert mit dem entsprechenden Hebelarm zwischen der Kippachse des Konverters (entsprechend der Längsachse der Tragzapfen 20) und der Längsachse des Hydraulikzylinders 6 ermittelt werden. Die Kraft auf den Kolben kann berechnet werden durch Erfassung der Drücke in dem Ringbereich und in dem Kolbenbereich des Hydraulikzylinders mit Hilfe des ersten und zweiten Drucksensors 5a, 5b unter Berücksichtigung der jeweils wirksamen Druckflächen des Kolbens. Der Drehmomenten-Regelkreis 20 umfasst weiterhin eine erste Vergleichereinrichtung 24 zum Ermitteln einer Drehmomenten-Regelabweichung e_{M} als Differenz zwischen dem vorgegebenen Soll-Drehmoment M_{Soll} und dem Ist-Drehmoment M_{Ist}. Weiterhin umfasst der Regelkreis eine erste Regeleinrichtung 8, beispielsweise in Form eines Proportional-Integral-Differenzial-PID-Reglers, zum Erzeugen eines ersten Anteils S_{M} eines Stellsignals S für die Momentenstütze bzw. das Servoventil 7 als Stellglied nach Maßgabe der Drehmomenten-Regelabweichung e_{M} so, dass die Drehmomenten-Regelabweichung zu Null wird. Das Soll-Drehmoment M_{Soll} kann grundsätzlich beliebig vorgegeben werden. Vorzugsweise wird es jedoch mit einer Soll-Drehmoment-Erzeugungseinrichtung 26 erzeugt durch Bildung eines zeitlichen, vorzugsweise gleitenden Mittelwertes einer Vielzahl von gemessenen Ist-Drehmomenten M_{Ist} (t).

Der Drehmomenten-Regelkreis 20 dient, wie gesagt dazu, das von dem Konverter 1 auf das Getriebe ausgeübte Ist-Drehmoment M_{Ist} (t) zu regeln bzw. auf der Höhe des Soll-Drehmomentes entsprechend konstant zu halten. Vorteilhafterweise ist der Konverter 1 dabei in seiner Winkelposition gegenüber dem Getriebe in keinster Weise festgelegt; vielmehr kann er sich in seiner Winkellage frei positionieren bzw. kann er frei schwingen. Lediglich das auf das Getriebe ausgeübte Drehmoment wird durch die Drehmomenten-Regelung kontrolliert und begrenzt.

Um jedoch auch einen Einfluss auf die Winkellage a des Getriebes 4 zu haben, sieht die vorliegende Erfindung gemäß einem Ausführungsbeispiel vorteilhafterweise vor, dass während eines Blasbetriebs des Konverters neben der besagten Regelung des Drehmomentes auch eine Regelung der Winkelposition a des Getriebes 4 mit Hilfe eines Winkellagen-Positionsregelkreises 30 erfolgt. Dieser Winkelpositions-Regelkreis 30 umfasst eine Winkellagen-Ermittlungseinrichtung 32 zum Messen der Ist-Winkellage α_{Ist} des Getriebes 4 in Abhängigkeit der Zeit. Diese Winkellagen-Ermittlungseinrichtung 32 kann beispielsweise ausgebildet sein in Form eines Weggebers 5c, welcher die Auslenkung der Momentenstütze 6 in Form des Hydraulikzylinders messtechnisch erfasst. Die so gemessene Auslenkung der Momentenstütze 6 ermöglicht unter Berücksichtigung des Abstandes des Hydraulikzylinders zu der Kippachse des Konverters in Form der Längsachse der Tragzapfen 2 eine Berechnung der Ist-Winkelposition a des Getriebes gegenüber der Horizontalen. Daneben weist der Winkelpositions-Regelkreis 30 eine zweite Vergleichereinrichtung 34 auf zum Ermitteln einer Winkellagen-Regelabweichung e_{α} als Differenz zwischen einer Soll-Winkellage, vorzugsweise α=0°, und der gemessenen Ist-Winkellage α_{Ist} (t). Weiterhin weist der Regelkreis 30 eine zweite Regeleinrichtung 9, beispielsweise ebenfalls in form eines PID-Reglers auf zum Erzeugen eines zweiten Anteils s_{α} des Stellsignals S für die Momentenstütze 6 als Stellglied nach Maßgabe der zuvor ermittelten Winkellagen-Regelabweichung e_{α}. Schließlich ist eine Additionseinrichtung 15 vorgesehen zum Addieren des ersten und des zweiten Anteils s_{M} und s_{α} zu dem Stellsignal S. Dabei ist das Stellsignal S so ausgebildet, dass die Drehmomenten-Regelabweichung und die Winkellagen-Regelabweichung während des Blasbetriebs des Konverters möglichst jeweils zu Null werden.

Die Größe des ersten Anteils s_{M}, welcher den Anteil der Drehmomenten-Regelung an dem Stellsignal S repräsentiert, und die Größe des zweiten Anteils s_{α}, welcher den Anteil der Winkelpositions-Regelung an dem Stellsignal S repräsentiert, sind mit Hilfe einer Anteils-Stelleinrichtung jeweils variabel einstellbar. Während des Blasbetriebs des Konverters ist der erste Anteil s_{M} erfindungsgemäß wesentlich größer als der zweite Anteil s_{α}. Die Drehmomenten-Regelung ist insofern der Winkelpositions-Regelung für das Getriebe übergeordnet.

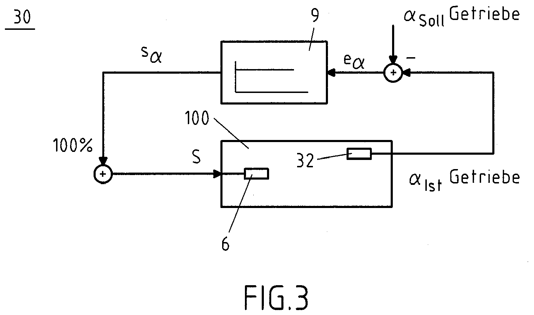

Figur 3 veranschaulicht das Verfahren zum Betreiben des Konverters 1 außerhalb des Gieß-Blasbetriebs. Typischerweise findet dann ein Kippen des Konverters mit Hilfe des Drehantriebs um die Längsachsen der Tragzapfen 2 statt, um den Konverter zumindest teilweise zu entleeren. Während dieser Betriebsphase sieht die Erfindung vor, dass dann lediglich die Ist-Winkellage α_{Ist} des Getriebes 4 auf eine vorgegebene Sollwinkellage des Getriebes α_{Soll} geregelt bzw. eingestellt wird. Dies erfolgt mit dem bereits unter Bezugnahme auf Figur 2 beschriebenen Winkelpositions-Regelkreis 30. Dieser Regelkreis 30 bleibt auch für die Betriebsphase außerhalb des Blasbetriebs unverändert gegenüber dem Blasbetrieb. Einziger Unterschied ist, dass außerhalb des Blasbetriebs das Stellsignal S zu 100 % dem von der zweiten Regeleinrichtung 9 erzeugten Reglerausgangssignal s_{α} entspricht. Der Anteil s_{M} des Drehmomenten-Regelkreises 20 ist während dieser Betriebsphase zu Null gesetzt bzw. abgeschaltet. Typischerweise wird außerhalb des Blasbetriebs das Getriebe auf eine Winkellagen-Position von α_{Soll}=0° (=horizontale Getriebeposition) geregelt.

Auch die zweite Regeleinrichtung 9 ist vorzugsweise als PID-Regler ausgebildet.

Sowohl bei der ersten wie auch bei der zweiten Regeleinrichtung 8, 9 wird die Größe der von ihnen jeweils bereitgestellten Anteile s_{M}, s_{α} an dem Stellsignal S maßgeblich durch ihren jeweiligen Proportionalanteil P bestimmt. Dann entspricht die Einstellung des P-Anteils der besagten Anteils-Stelleinrichtung.

### Bezugszeichenliste

- 1: Konverter
- 2: Tragzapfen
- 3: Tragring
- 4: Getriebe, vorzugsweise mit integriertem Drehantrieb
- 5a: Drucksensor
- 5b: Drucksensor
- 5c: Weggeber
- 6: Momentenstütze (Stellglied)
- 7: Servoventil
- 8: Erste Regeleinrichtung
- 9: Zweite Regeleinrichtung
- 10: Lagerblock
- 11: Lager
- 12: Fundament
- 13: Unterbadspiegel-Gasdüsen
- 14: Tragelemente
- 15: Additionseinrichtung
- 20: Drehmomenten-Regelkreis
- 22: Drehmomenten-Ermittlungseinrichtung
- 24: Erste Vergleichereinrichtung
- 26: Soll-Drehmoment-Erzeugungseinrichtung
- 30: Winkelposition-Regelkreis
- 32: Winkellagen-Ermittlungseinrichtung
- 34: Zweite Vergleichereinrichtung
- 100: Tragevorrichtung

- e_{α}: Winkellagen Regelabweichung
- e_{M}: Drehmomenten-Regelabweichung
- α_{Soll-Getriebe}: Soll-Winkellage für das Getriebe
- α_{Ist-Getriebe}: Ist-Winkellage für das Getriebe
- M_{Ist}(t): Ist-Drehmoment des Konverters
- M_{Soll}: vorgegebenes Soll-Drehmoment
- s_{M}: Erster Anteil eines Stellsignals für die Momentenstütze
- s_{α}: Zweiter Anteil des Stellsignals für die Momentenstütze
- S: Stellsignal
- α: Winkelposition des Getriebes

## Patentansprüche

1. Verfahren zum Betreiben eines Konverters (1), welcher über Tragzapfen (2) in einem Getriebe (4) - um die Längsachsen der Tragzapfen - kippbar gelagert und mit dem Getriebe drehgekoppelt ist, wobei der Konverter (1) und das Getriebe (4) über eine Momentenstütze (6) permanent an einem Fundament abgestützt sind;
wobei es sich bei der Momentenstütze um einen Hydraulikzylinder mit angeschlossenem Servoventil oder um einen elektromechanischem Antrieb handelt; und
wobei das Verfahren in einem Blasbetrieb des Konverters (1) **gekennzeichnet ist durch** folgenden Schritt:
Regeln des von dem Konverter (1) auf das Getriebe (4) ausgeübten zeitlich variablen Ist-Drehmomentes Mist(t) auf ein vorgegebenes Soll-Drehmoment M_{Soll},
wobei der Schritt des Regelns des Drehmomentes folgende Teilschritte aufweist:
Ermitteln des von dem Konverter (1) auf das Getriebe (4) ausgeübten zeitlich variablen Ist-Drehmomentes M_{Ist}(t);
Vorgeben des Soll-Drehmomentes M_{Soll};
Ermitteln einer Drehmomenten-Regelabweichung (e_{M}) als Differenz zwischen dem Soll-Drehmoment M_{Soll} und dem Ist-Drehmoment M_{Ist};
Erzeugen - mit Hilfe einer ersten Regeleinrichtung - eines ersten Anteils (s_{M}) eines Stellsignals (S) für die Momentenstütze (6) als Stellglied nach Maßgabe der Drehmomenten-Regelabweichung (e_{M}) so, dass die Drehmomenten Regelabweichung (e_{M}) zu Null wird.

2. Verfahren nach Anspruch 1;
**dadurch gekennzeichnet,**
**dass** das Soll-Drehmoment M_{Soll} vorgegeben wird als Mittelwert einer Mehrzahl von Abtastwerten des ermittelten zeitlich variablen Ist-Drehmomentes (M_{Ist}).

3. Verfahren nach einem der vorangegangenen Ansprüche,
**gekennzeichnet durch**
zusätzliches Regeln der Ist-Winkelposition (α_{Ist}) des Getriebes während des Blasbetriebs des Konverters (1) auf eine vorgegebene Soll-Winkelposition (α_{Soll}), vorzugsweise α_{Soll}=0°.

4. Verfahren nach Anspruch 3,
**dadurch gekennzeichnet,**
**dass** der Schritt des Regelns der Winkelposition a folgende Teilschritte aufweist:
Ermitteln der Ist-Winkellage (α_{Ist}) des Getriebes (4);
Vorgeben der Soll-Winkellage (α_{Soll}) des Getriebes (4);
Ermitteln einer Winkellagen-Regelabweichung (e_{α}) als Differenz zwischen der Soll-Winkellage und der Ist-Winkellage;
Erzeugen - mit Hilfe einer zweiten Regeleinrichtung (9) - eines zweiten Anteils (s_{α}) des Stellsignals (S) für die Momentenstütze (6) als Stellglied nach Maßgabe der Winkellagen-Regelabweichung (e_{α});
Addieren des ersten und der zweiten Anteils zu dem Stellsignal (S); und
Ansteuern der Momentenstütze (6) als Stellglied mit dem Stellsignal (S) so,
**dass** die Drehmomenten-Regelabweichung (e_{M}) und die Winkellagen-Regeldifferenz (e_{α}) möglichst jeweils zu Null werden.

5. Verfahren nach Anspruch 4,
**dadurch gekennzeichnet,**
**dass** der erste Anteil (s_{M}) und der zweite Anteil (s_{α}) am dem Stellsignal (S) jeweils individuell gewichtet werden, beispielsweise über die jeweiligen P-Anteile in der ersten und der zweiten Regeleinrichtung (8, 9); und
**dass** während des Blasbetriebs der zweite Anteil kleiner ist als der erste Anteil, beispielsweise um einen Faktorbereich von 100 - 10.

6. Verfahren nach einem der vorangegangenen Ansprüche,
**dadurch gekennzeichnet,**
**dass** das Verfahren außerhalb eines Blasbetriebes des Konverters (1) folgenden Schritt aufweist:
Regeln der Ist-Winkelposition (α_{Ist}) des Getriebes auf eine vorgegebene Soll-Winkelposition (α_{Soll}), vorzugsweise α_{Soll}=0°.

7. Verfahren nach Anspruch 1 bis 5,
**dadurch gekennzeichnet,**
**dass** der Schritt des Regelns der Winkelposition außerhalb des Blasbetriebs folgende Teilschritte aufweist:
Ermitteln der Ist-Winkellage (α_{Ist}) des Getriebes (4);
Vorgeben der Soll-Winkellage (α_{Soll}) des Getriebes (4);
Ermitteln der Winkellagen-Regelabweichung (e_{α}) als Differenz zwischen der Soll-Winkellage und der Ist-Winkellage des Getriebes; und
Erzeugen - mit Hilfe der zweiten Regeleinrichtung (9) - des Stellsignals (S) für die Momentenstütze (6) als Stellglied nach Maßgabe der Winkellagen-Regelabweichung (e_{α}) so, dass die Winkellagen-Regelabweichung zu Null wird.

8. Verfahren nach einem der vorangegangenen Ansprüche,
**dadurch gekennzeichnet,**
**dass** der Konverter (1) - insbesondere außerhalb des Blasbetriebs - mit Hilfe eines dem Getriebe (4) zugeordneten Antriebs um die Längsachse der Tragzapfen (2) gekippt wird.

9. Tragvorrichtung (100) für einen Konverter (1), aufweisend:
einen Tragring (3) mit sich radial nach außen erstreckenden Tragzapfen (2) zur Aufnahme des Konverters (1);
auf einem Fundament (12) abgestützte Lagerblöcke (10) mit darauf angeordneten Lagern (11) in welchen die Tragzapfen (2) und damit der Tragring (3),
typischerweise mit dem Konverter (1), drehbar gelagert sind;
einen Antrieb mit einem Getriebe (4), in weichem einer der Tragzapfen (2) drehgekoppelt gelagert ist zum Kippen des Tragringes (3), typischerweise zusammen mit dem Konverter; und
eine Momentenstütze (6) in Form eines Hydraulikzylinders mit angeschlossenem Servoventil oder eines elektromechanischen Antriebs zum Abstützen des Getriebes (4) mit dem Antrieb gegenüber dem Fundament (12);
**dadurch gekennzeichnet,**
**dass** ein Drehmomenten-Regelkreis vorgesehen und ausgebildet ist zum Regeln des von dem Konverter (1) in einem Blasbetrieb auf das Getriebe (4) ausgeübte zeitlich variable Ist-Drehmomentes M_{Ist}(t) auf ein vorgegebenes Soll-Drehmoment M_{Soll};
**dass** der Drehmomenten-Regelkreis (20) folgende Komponenten aufweist:
eine Drehmomenten-Ermittlungseinrichtung (22), insbesondere eine Messeinrichtung zum Ermitteln des von dem Konverter auf das Getriebe ausgeübten zeitlich variablen Ist-Drehmomentes M_{Ist}(t);
eine erste Vergleichereinrichtung (24) zum Ermitteln einer Drehmomenten-Regelabweichung (e_{M}) als Differenz zwischen dem vorgegebenen Soll-Drehmoment M_{Soll} und dem Ist-Drehmoment M_{Ist}; und
eine erste Regeleinrichtung (8) zum Erzeugen eines ersten Anteils (s_{M}) eines Stellsignals (S) für die Momentenstütze (6) als Stellglied nach Maßgabe der Drehmomenten-Regelabweichung (e_{M}) so, dass die Drehmomenten Regelabweichung zu Null wird.

10. Tragvorrichtung (100) nach Anspruch 9, **dadurch gekennzeichnet,**
**dass** eine Soll-Drehmoment-Erzeugungseinrichtung (26) vorgesehen ist zum Berechnen des Soll-Drehmomentes durch Bildung eines zeitlichen, vorzugsweise gleitenden Mittelwertes einer Vielzahl von gemessenen Ist-Drehmomenten.

11. Tragvorrichtung (100) nach einem der Ansprüche 9 oder 10, **dadurch gekennzeichnet,**
**dass** der Hydraulik-Zylinder einen ersten Drucksensor (5a) aufweist zum Erfassen des Drucks in dem Ringbereich des Hydraulik-Zylinders und einen zweiten Drucksensor (5b) aufweist zum Erfassen des Drucks in dem Kolbenbereich des Hydraulikzylinders; und
**dass** die Drehmomenten-Ermittlungseinrichtung (22) ausgebildet ist, das Ist-Drehmoment, welches der Konverter auf das Getriebe ausübt, zu ermitteln durch Ermittlung der auf den Kolben des Hydraulik-Zylinders wirkenden Kraft aus zumindest einem der erfassten Drücke und zum Berechnen des Ist-Drehmomentes durch Multiplikation der ermittelten Kraft mit dem Hebelarm zwischen der Längsachse der Tragzapfen und der Längsachse des HydraulikZylinders.

12. Tragvorrichtung (100) nach einem der Ansprüche 9 bis 11 **gekennzeichnet durch**
einen **gekennzeichnet durch**
einen Winkelpositions-Regelkreis (30) zum zusätzlichen Regeln der Ist-Winkelposition (α_{Ist}) des Getriebes während des Blasbetriebs des Konverters auf eine vorgegebene Soll-Winkelposition (α_{Soll}), vorzugsweise auf 0°.

13. Tragvorrichtung (100) nach Anspruch 12, **dadurch gekennzeichnet,**
**dass** der Winkelpositions-Regelkreis (30) folgende Komponenten aufweist:
eine Winkellagen-Ermittlungseinrichtung (32) zum Messen der Ist-Winkellage (α_{Ist}) des Getriebes;
eine zweite Vergleichereinrichtung (34) zum Ermitteln einer Winkellagen-Regelabweichung eα als Differenz zwischen der Soll-Winkellage und der Ist-Winkellage;
eine zweiten Regeleinrichtung (9) zum Erzeugen eines zweiten Anteils (s_{α}) des Stellsignals (S) für die Momentenstütze (6) als Stellglied nach Maßgabe der Winkellagen-Regelabweichung;
eine Additionseinrichtung 15 zum Addieren des ersten und des zweiten Anteils zu dem Stellsignal; wobei das Stellsignal (S) so ausgebildet ist, dass die Drehmomenten-Regelabweichung und die Winkellagen-Regelabweichung möglichst jeweils zu Null werden.

14. Tragvorrichtung (100) nach einem der Ansprüche 9 bis 13 **gekennzeichnet durch**
mindestens eine Anteils-Stelleinrichtung, beispielsweise in Form der P-Anteile der Regeleinrichtungen (8,9), zum Einstellen der Größe des ersten und des zweiten Anteils (s_{M}, s_{α}) an dem Stellsignal (S).

15. Tragvorrichtung (100) nach Anspruch 14, **dadurch gekennzeichnet,**
**dass** die Anteils-Stelleinrichtung ausgebildet ist,
für einen Blasbetrieb des Konverters den ersten Anteil (s_{M}), betreffend den Drehmomenten-Anteil, größer als den zweiten Anteil (s_{α}), betreffend den Winkelpositions-Anteil, einzustellen; und
für einen Nicht-Blasbetrieb des Konverters den ersten Anteil (s_{M}) zu Null und den zweiten Anteil (s_{α}) zu 100 % einzustellen.

## Claims

1. Method of operating a converter (1), which is mounted by way of support journals (2) in a transmission (4) to be tiltable about the longitudinal axes of the support journals and which is rotatably coupled with the transmission, wherein the converter (1) and the transmission (4) are permanently supported on a foundation by way of a torque support (6);
wherein the torque support is a hydraulic cylinder with a connected servo valve or is an electromagnetic drive; and
wherein the method in a blowing mode of the converter (1) is **characterised by** the following step:
regulating the time-variable actual torque M_{Ist}(t) exerted on the transmission (4) by the converter (1) to a preset target torque M_{Soll},
wherein the step of regulating the torque comprises the following substeps:
determining the time-variable actual torque M_{Ist}(t) exerted on the transmission (4) by the converter (1);
presetting the target torque M_{Soll};
determining a torque regulating deviation (e_{M}) as the difference between the target torque M_{Soll} and the actual torque M_{Ist};
generating - with the help of a first regulating device - a first component (s_{M}) of a setting signal (S) for the torque support (6) as a setting element in accordance with the torque regulating deviation (e_{M}) so that the torque regulating deviation (e_{M}) becomes zero.

2. Method according to claim 1,
**characterised in that** the target torque M_{Soll} is present as a mean value of a plurality of sampled values of the determined time-variable actual torque (M_{Ist}).

3. Method according to one of the preceding claims,
**characterised by** additionally regulating the actual angular position (α_{Ist}) of the transmission during the blowing mode of the converter (1) to a preset target angular position (α_{Soll}), preferably α_{Soll} = 0°.

4. Method according to claim 3,
**characterised in that** the step of regulating the angular position a comprises the following substeps:
determining the actual angular orientation (α_{Ist}) of the transmission (4);
presetting the target angular orientation (α_{Soll}) of the transmission (4);
determining an angular orientation regulating deviation (e_{α}) as the difference between the target angular orientation and the actual angular orientation;
generating - with the help of a second regulating device (9) - a second component (_{Sα}) of the setting signal (S) for the torque support (6) as a setting element in accordance with the angular orientation regulating deviation (e_{α});
adding the first and second components to form the setting signal (S); and
activating the torque support (6) as a setting element with the setting signal (S) so that, as far as possible, the torque regulating deviation (e_{M}) and the angular orientation regulating deviation (e_{α}) each become zero.

5. Method according to claim 4,
**characterised in that** the first component (s_{M}) and the second component (s_{α}) of the setting signal (S) are each individually weighted, for example by way of the respective P components in the first and second regulating devices (8, 9); and
during the blowing mode the second component is smaller than the first component, for example by a factor in the range of 100 - 10.

6. Method according to one of the preceding claims,
**characterised in that** when the converter (1) is not in a blowing mode the method comprises the following step:
regulating the actual angular position (α_{Ist}) of the transmission to a preset target angular position (α_{Soll}), preferably α_{Soll} = 0°.

7. Method according to claim 1 to 5,
**characterised in that** the step of regulating the angular position when not in the blowing mode comprises the following substeps:
determining the actual angular orientation (α_{Ist}) of the transmission (4);
presetting the target angular orientation (α_{Soll}) of the transmission (4);
determining the angular orientation regulating deviation (e_{α}) as the difference between the target angular orientation and the actual angular orientation of the transmission; and
generating - with the help of the second regulating device (9) - the setting signal (S) for the torque support (6) as a setting element in accordance with the angular orientation regulating deviation (e_{α}) so that the angular orientation regulating deviation becomes zero.

8. Method according to any one of the preceding claims,
**characterised in that** the converter (1) - in particular when not in the blowing mode - is tilted about the longitudinal axis of the support journals (2) with the help of a drive associated with the transmission (4).

9. Support device (100) for a converter (1), comprising:
a support ring (3) with radially outwardly extending support journals (2) for receiving the converter (1);
bearing blocks (10), which are supported on a foundation (12), with bearings (11) which are arranged on the blocks and in which the support journals (2) and thus the support ring (3), typically with the converter (1), are rotatably mounted;
a drive with a transmission (4), in which one of the support journals (2) is mounted in a rotatably coupled manner for tilting the support ring (3), typically together with the converter; and
a torque support (6) in the form of a hydraulic cylinder with a connected servo valve or in the form of an electromagnetic drive for supporting the transmission (4) together with the drive with respect to the foundation (12);
**characterised in that**
a torque regulating circuit is provided and is configured for regulating the time-variable actual torque M_{Ist}(t) exerted on the transmission (4) by the converter (1) in a blowing mode to a preset target torque M_{Soll};
the torque regulating circuit (20) comprises the following components:
a torque determining device (22), in particular a measuring device, for determining the time-variable actual torque M_{Ist}(t) exerted on the transmission by the converter;
a first comparison device (24) for determining a torque regulating deviation (e_{M}) as the difference between the preset target torque M_{Soll} and the actual torque M_{Ist}; and
a first regulating device (8) for generating a first component (s_{M}) of a setting signal (S) for the torque support (6) as a setting element in accordance with the torque regulating deviation (e_{M}) so that the torque regulating deviation becomes zero.

10. Support device (100) according to claim 9,
**characterised in that** a target torque generating device (26) is provided for calculating the target torque by forming a time-based preferably moving mean value of a plurality of measured actual torques.

11. Support device (100) according to one of claims 9 and 10,
**characterised in that** the hydraulic cylinder has a first pressure sensor (5a) for sensing the pressure in the annular region of the hydraulic cylinder and a second pressure sensor (5b) for sensing the pressure in the piston region of the hydraulic cylinder; and
the torque determining device (22) is configured to determine the actual torque which the converter exerts on the transmission by determining the force, which acts on the piston of the hydraulic cylinder, from at least one of the sensed pressures and for calculating the actual torque by multiplication of the determined force by the lever arm between the longitudinal axis of the support journals and the longitudinal axis of the hydraulic cylinder.

12. Support device (100) according to any one of claims 9 to 11,
**characterised by** an angular position regulating circuit (30) for additionally regulating the actual angular position (α_{Ist}) of the transmission during the blowing mode of the converter to a preset target angular position (α_{Soll}), preferably to 0°.

13. Support device (100) according to claim 12,
**characterised in that** the angular position regulating circuit (30) comprises the following components:
an angular orientation determining device (32) for measuring the actual angular orientation (α_{Ist}) of the transmission;
a second comparison device (34) for determining an angular orientation regulating deviation e_{α} as the difference between the target angular orientation and the actual angular orientation;
a second regulating device (9) for generating a second component (s_{α}) of the setting signal (S) for the torque support (6) as a setting element in accordance with the angular orientation regulating deviation;
an adding device 15 for adding the first and second components to form the setting signal;
wherein the setting signal (S) is designed so that, as far as possible, the torque regulating deviation and the angular orientation regulating deviation become zero.

14. Support device (100) according to any one of claims 9 to 13,
**characterised by** at least one component setting device, for example in the form of the P components of the regulating devices (8, 9), for setting the magnitude of the first and second components (s_{M}, s_{α}) of the setting signal (S).

15. Support device (100) according to claim 14,
**characterised in that** the component setting device is configured to set the first component (s_{M}), which concerns the torque component, to be greater than the second component (s_{α}), which concerns the angular position component, for a blowing mode of the converter; and
to set the first component (s_{M}) to zero and the second component (s_{α}) to 100% for a nonblowing mode of the converter.

## Revendications

1. Procédé destiné à la mise en service d'un convertisseur (1) qui est monté en basculement dans un organe de transmission (4) par l'intermédiaire de tourillons de support (2) - autour des axes longitudinaux des tourillons de support - et qui est couplé en rotation à l'organe de transmission ; dans lequel le convertisseur (1) et l'organe de transmission (4) sont disposés en appui, par l'intermédiaire d'un support de couples (6) en permanence, sur un socle ;
dans lequel, en ce qui concerne le support de couples, il s'agit d'un cylindre hydraulique auquel est raccordée une servosoupape ou il s'agit d'un dispositif d'entraînement de type électromécanique ; et
dans lequel le procédé, dans un mode de fonctionnement du convertisseur (1) par soufflage, est **caractérisé par** l'étape suivante dans laquelle :
on procède à une régulation du couple de rotation réel M_{Ist}(t) variable dans le temps qui s'exerce à partir du convertisseur (1) sur l'organe de transmission (4) en prenant comme référence un couple de rotation de consigne M_{Soll} qui a été prédéfini ;
dans lequel l'étape dans laquelle on procède à une régulation du couple de rotation présente les étapes partielles indiquées ci-après dans lesquelles :
on détermine le couple de rotation réel M_{Ist}(t) variable dans le temps qui s'exerce à partir du convertisseur (1) sur l'organe de transmission (4) ;
on prédéfinit le couple de rotation de consigne M_{Soll} :
on détermine un écart de régulation des couples de rotation (e_{M}) comme étant la différence entre le couple de rotation de consigne M_{Soll} et le couple de rotation réel M_{Ist} ;
on génère - à l'aide d'un premier mécanisme de régulation - une première fraction (S_{M}) d'un signal de réglage (S) pour le support de couples (6) à titre d'organe de réglage en fonction de l'écart de régulation des couples de rotation (e_{M}), d'une manière telle que l'on obtient une valeur égale à zéro pour l'écart de régulation des couples de rotation (e_{M}) du support de couples (6).

2. Procédé selon la revendication 1, **caractérisé en ce que** l'on prédéfinit le couple de rotation de consigne M_{Soll} sous la forme d'une valeur moyenne d'une multitude de valeurs de détection du couple de rotation réel (M_{Ist}) variable dans le temps qui a été déterminé.

3. Procédé selon l'une quelconque des revendications précédentes, **caractérisé en ce que** l'on procède en outre à une régulation de la position angulaire réelle (α_{Ist}) de l'organe de transmission au cours de la mise en service du convertisseur (1) dans le mode de soufflage en prenant comme référence une position angulaire de consigne (α_{Soll}) qui a été prédéfinie, de préférence de telle sorte que α_{Soll} = 0°.

4. Procédé selon la revendication 3, **caractérisé en ce que** l'étape de régulation de la position angulaire a présente les étapes partielles indiquées ci-après dans lesquelles :
on détermine la position angulaire réelle (α_{Ist}) de l'organe de transmission (4) ;
on prédéfinit la position angulaire de consigne (α_{Soll}) de l'organe de transmission (4) ;
on détermine un écart de régulation des positions angulaires (e_{α}) comme étant la différence entre la position angulaire de consigne et
la position angulaire réelle ;
on génère - à l'aide d'un deuxième mécanisme de régulation (9) - une deuxième fraction (S_{α}) du signal de réglage (S) pour le support de couples (6) à titre d'organe de réglage en fonction de l'écart de régulation des positions angulaires (e_{α}) ;
on additionne la première fraction et la deuxième fraction au signal de réglage (S) ; et
on entraîne le support de couples (6) à titre d'organe de réglage avec le signal de réglage (S) d'une manière telle que l'on obtient dans la mesure du possible respectivement une valeur nulle pour l'écart de régulation des couples de rotation (e_{M}) et pour la différence de régulation des positions angulaires (e_{α}).

5. Procédé selon la revendication 4, **caractérisé en ce que** l'on soumet de manière respectivement individuelle la première fraction (S_{M}) et la deuxième fraction (S_{α}) du signal de réglage (S) à une pondération, par exemple par l'intermédiaire des fractions respectives P dans le premier et le deuxième mécanisme de réglage (8, 9) ; et **en ce que**, au cours de la mise en service dans le mode de soufflage, la deuxième fraction est inférieure à la première fraction, par exemple à concurrence d'une plage factorielle de 100 à 10.

6. Procédé selon l'une quelconque des revendications précédentes, **caractérisé en ce que** le procédé, en dehors d'une mise en service du convertisseur (1) en mode de soufflage, présente l'étape indiquée ci-après dans laquelle :
on procède à une régulation de la position angulaire réelle (α_{Ist}) de l'organe de transmission en prenant comme référence une position angulaire de consigne (α_{Soll}) qui a été prédéfinie, de préférence de telle sorte que α_{Soll} = 0°.

7. Procédé selon l'une quelconque des revendications 1 à 5, **caractérisé en ce que** l'étape dans laquelle on procède à la régulation de la position angulaire en dehors d'une mise en service en mode de soufflage, présente les étapes partielles indiquées ci-après, dans lesquelles :
on détermine la position angulaire réelle (α_{Ist}) de l'organe de transmission (4) ;
on prédéfinit la position angulaire de consigne (α_{Soll}) de l'organe de transmission (4) ;
on détermine l'écart de régulation des positions angulaires (e_{α}) comme étant la différence entre la position angulaire de consigne et la position angulaire réelle de l'organe de transmission ; et
on génère - à l'aide du deuxième mécanisme de régulation (9) - le signal de réglage (S) pour le support de couples (6) à titre d'organe de réglage en fonction de l'écart de régulation des positions angulaires (e_{α}), d'une manière telle que l'on obtient une valeur nulle pour l'écart de régulation des positions angulaires.

8. Procédé selon l'une quelconque des revendications précédentes, **caractérisé en ce que** l'on fait basculer le convertisseur (1) - en particulier en dehors de la mise en service dans le mode de soufflage - à l'aide d'un dispositif d'entraînement qui est attribué à l'organe de transmission (4), autour de l'axe longitudinal des tourillons de support (2).

9. Dispositif de support (100) destiné à un convertisseur (1) qui présente :
un anneau de support (3) qui comprend des tourillons de support (2) qui s'étendent vers l'extérieur dans la direction radiale, qui sont destinés à la réception du convertisseur (1) ;
des blocs de paliers (10) qui prennent appui sur un socle (12), sur lesquels sont disposés des paliers (11) dans lesquels sont montés en rotation les tourillons de support (2) et par conséquent l'anneau de support (3), comme c'est le cas habituellement avec le convertisseur (1) ;
un dispositif d'entraînement qui comprend un organe de transmission (4) dans lequel un des tourillons de support (2) est monté en accouplement rotatif à des fins de basculement de l'anneau de support (3), comme c'est le cas habituellement de manière conjointe avec le convertisseur ; et
un support de couples (6) sous la forme d'un cylindre hydraulique auquel est raccordée une servosoupape ou un dispositif d'entraînement de type électromécanique à des fins de support de l'organe de transmission (4) avec le dispositif d'entraînement par rapport au socle (12) ;
**caractérisé**
**en ce que** l'on prévoit un circuit de régulation des couples de rotation et on le met en oeuvre à des fins de régulation du couple de rotation réel M_{Ist}(t) variable dans le temps, qui s'exerce à partir du convertisseur (1) sur l'organe de transmission (4) dans un mode de fonctionnement par soufflage, en prenant comme référence un couple de rotation de consigne M_{Soll} qui a été prédéfini ;
**en ce que** le circuit de régulation des couples de rotation (20) présente les composants indiqués ci-après :
un mécanisme de détermination des couples de rotation (22), en particulier un mécanisme de mesure qui est destiné à la détermination du couple de rotation réel M_{Ist}(t) variable dans le temps, qui s'exerce à partir du convertisseur sur l'organe de transmission ;
un premier mécanisme de comparaison (24) qui est destiné à déterminer un écart de régulation des couples de rotation (e_{M}) comme étant la différence entre le couple de rotation de consigne M_{Soll} et le couple de rotation réel M_{Ist} ; et
un premier mécanisme de régulation (8) qui est destiné à générer une première fraction (S_{M}) d'un signal de réglage (S) pour le support de couples (6) à titre d'organe de réglage en fonction de l'écart de régulation des couples de rotation (e_{M}), d'une manière telle que l'on obtient une valeur nulle pour l'écart de régulation des couples de rotation.

10. Dispositif de support (100) selon la revendication 9, **caractérisé en ce que** l'on prévoit un mécanisme de génération d'un couple de rotation de consigne (26) qui est destiné à calculer le couple de rotation de consigne par l'intermédiaire d'une élaboration d'une valeur moyenne temporelle, de préférence mobile, à partir d'une multitude de couples de rotation réels qui ont été mesurés.

11. Dispositif de support (100) selon l'une quelconque des revendications 9 ou 10, **caractérisé**
**en ce que** le cylindre hydraulique présente un premier capteur de la pression (5a) qui est destiné à enregistrer la pression qui règne dans la zone annulaire du cylindre hydraulique et présente un deuxième capteur de la pression (5b) qui est destiné à enregistrer la pression qui règne dans la zone du piston du cylindre hydraulique ; et
**en ce que** le mécanisme de détermination des couples de rotation (22) est réalisé à des fins de détermination du couple de rotation réel qu'exerce le convertisseur sur l'organe de transmission, par l'intermédiaire de la détermination de la force qui s'exerce sur le piston du cylindre hydraulique à partir d'au moins une des pressions qui ont été enregistrées et à des fins de calcul du couple de rotation de consigne par l'intermédiaire d'une multiplication de la force, qui a été déterminée, par le bras de levier entre l'axe longitudinal des tourillons de support et l'axe longitudinal du cylindre hydraulique.

12. Dispositif de support (100) selon l'une quelconque des revendications 9 à 11, **caractérisé par** un circuit de régulation de la position angulaire (30) qui est destiné à la régulation supplémentaire de la position angulaire réelle (α_{Ist}) de l'organe de transmission au cours de la mise en service du convertisseur dans le mode de soufflage en prenant comme référence une position angulaire de consigne (α_{Soll}) qui a été prédéfinie, de préférence de telle sorte que α_{Soll} = 0°.

13. Dispositif de support (100) selon la revendication 12, **caractérisé en ce que** le circuit de régulation de la position angulaire (30) présente les composants indiqués ci-après :
un mécanisme de détermination des positions angulaires (32) qui est destiné à mesurer la position angulaire réelle (α_{Ist}) de l'organe de transmission ;
un deuxième mécanisme de comparaison (34) qui est destiné à déterminer un écart de régulation des positions angulaires (e_{α}) comme étant la différence entre la position angulaire de consigne et
la position angulaire réelle ;
un deuxième mécanisme de régulation (9) qui est destiné à générer une deuxième fraction (S_{α}) du signal de réglage (S) pour le support de couples (6) à titre d'organe de réglage en fonction de l'écart de régulation des positions angulaires ;
un mécanisme d'addition (15) qui destiné à additionner la première fraction et la deuxième fraction au signal de réglage (S) ; dans lequel le signal de réglage (S) est conçu d'une manière telle que l'on obtient dans la mesure du possible respectivement une valeur nulle pour l'écart de régulation des couples de rotation et pour l'écart de régulation des positions angulaires.

14. Dispositif de support (100) selon l'une quelconque des revendications 9 à 13, **caractérisé par** au moins un mécanisme de réglage de type fractionnel, par exemple sous la forme des fractions P des mécanismes de régulation (8, 9), à des fins de réglage de la valeur de la première fraction et de la deuxième fraction (S_{M}, S_{α}) du signal de réglage (S).

15. Dispositif de support (100) selon la revendication 14, **caractérisé en ce que** le mécanisme de réglage de type fractionnel est conçu, pour une mise en service du convertisseur dans le mode de soufflage, en ce qui concerne la fraction du couple de rotation, à des fins de réglage de la première fraction (S_{M}) de telle manière qu'elle soit supérieure à la deuxième fraction (S_{α}), en ce qui concerne la fraction de la position angulaire ; et, pour une mise en service du convertisseur en dehors du mode de soufflage, à des fins de réglage de la première fraction (S_{M}) à une valeur égale à zéro et la deuxième fraction (S_{α}) à une valeur qui s'élève à 100 %.
